## Europäisches Patentamt
## European Patent Office
## Office européen des brevets

(11) Publication number: **0 115 103**
**B1**

(12) # EUROPEAN PATENT SPECIFICATION

(45) Date of publication of patent specification: **25.11.87**

(51) Int. Cl.⁴: **B 32 B 15/08**

(21) Application number: **83300338.7**

(22) Date of filing: **24.01.83**

(54) **Metal-resin-metal sandwich laminates suitable for use in working.**

(43) Date of publication of application:
**08.08.84 Bulletin 84/32**

(45) Publication of the grant of the patent:
**25.11.87 Bulletin 87/48**

(84) Designated Contracting States:
**BE DE FR GB IT NL**

(56) References cited:
**EP-A-0 007 639**
**EP-A-0 034 781**
**EP-A-0 050 096**
**EP-A-0 078 174**
**GB-A-1 386 794**
**US-A-3 620 878**
**US-A-3 721 597**

(73) Proprietor: **SUMITOMO METAL INDUSTRIES, LTD.**
**15, Kitahama 5-chome Higashi-ku**
**Osaka-shi, Osaka, 541 (JP)**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Shiota, Toshiaka**
**1922-33 Miyanokawara-1-chome**
**Takatsuki-shi Osaka (JP)**
Inventor: **Nishihara**
**24 Kitashirakawa-Hirai-cho**
**Sakyo-ku Kyoto-shi Kyoto (JP)**
Inventor: **Nagai, Hiroyuki**
**4-13-104 Minamikoshien 1-chome**
**Nishinomiya-shi Kyogo-ken (JP)**
Inventor: **Kitagawa, Hoshihiko**
**8-6 Kitasakurazuke 2-chome**
**Toyonaka-shi Osaka (JP)**
Inventor: **Sonobe, Takanobu**
**9-35 Miyano-cho**
**Takatsuki-shi Osaka (JP)**
Inventor: **Toya, Hiroo**
**2-1-146 Kuwata-cho**
**Ibaragi-shi Osaka (JP)**

(72) Inventor: **Kondo, Masatsune**
**6-30, Maeda-cho**
**Niihama-shi Ehime-ken (JP)**

(74) Representative: **Arthur, Bryan Edward et al**
**Withers & Rogers 4 Dyer's Buildings Holborn**
**London EC1N 2JT (GB)**

# 0 115 103

## Description

This invention relates to metal-resin-metal sandwich laminates which can withstand severe working such as bending and drawing and are especially suitable for use in working, for example, manufacture of automobile bodies.

Metal-resin-metal sandwich construction panels or sandwich laminates which comprise a resin layer sandwiched between and bonded to outer metal layers are characterized by their excellent heat insulating and vibration damping properties as well as their light weight. In view of these characteristics, they were developed initially for use as building materials and, in fact, they have heretofore been employed mainly in such applications. Recently, however, the use of these sandwich laminates in automobile parts such as automobile bodies has been studied with particular attention to their light weight. In such applications, the laminates are required to have good workability because they undergo relatively severe working such as bending and drawing during fabrication into the desired articles. Unfortunately the construction of the prior art metal-resin-metal sandwich laminates which have generally been employed as building materials or the like is not suited at all to undergo severe working since the outer metal layers bonded to the resin layer tend to come away from the resin layer by the force applied thereon during bending, resulting in partial or complete delamination. In order to overcome this problem, it is known that the bond strength between a resin and a metal layers in a laminate can be retained even after bending when the resin is modified so as to have good adhesion to the metal. However, when certain modified resins such as modified polypropylene are employed as the resin layer, they offer another problem in that cracking of the outer metal layers tends to occur during bending. Therefore, such laminates also cannot withstand severe working.

Many techniques have been proposed in the prior art to avoid deterioration in workability of metal-resin-metal sandwich laminates or to improve workability thereof. For example, Japanese Patent Publication No. 4739/1964 discloses specific requirements which ensure that a laminate will not spring back after bending and that delamination and breaking of the resin sheet will not occur during bending. It is proposed in Japanese Patent Publication No. 30111/1972 that powdered inorganic material be incorporated in the resin layer to improve cold workability of the laminate. However, neither of the prior art techniques give special consideration to cracking of the outer metal layers during bending and therefore it cannot be expected that they are effective to avoid such cracking.

Japanese Patent Laid-Open Specification No. 156052/1980 discloses metal-plastic-metal laminates capable of withstanding bending up to an angle of 90°. However, in view of the severe working actually encountered in the manufacture of automobile parts, it cannot be said that these laminates are satisfactory for automobile applications.

Attention is also drawn to EP—A—0050096 which discloses the use of a fusible fibre coated with thermosetting adhesive for gluing together various materials, including aluminium and to EP—A—0034781 which discloses a composite material comprising synthetic thermoplastic material sandwiched between covering layers of aluminium.

It is an object of the present invention to provide metal-resin-metal sandwich laminates which have improved workability and which can withstand the severe working such as bending and drawing encountered in the manufacture of automobile parts.

Another object of the invention is to provide metal-resin-metal sandwich laminates capable of undergoing severe working without the outer metal layers cracking during working.

Still another object is to provide metal-resin-metal sandwich laminates which possess the properties required for working purposes such as minimized spring-back of the worked laminates as well as other desirable properties inherent in this type of sandwich laminates such as good heat resistance.

A further object of the invention is to provide steel-resin-steel sandwich laminates having improved resistance to corrosion, particulary to corrosion beginning at their edge faces.

The invention, which is defined in the appended claims, provides a metal-resin-metal sandwich laminate comprising a resin layer sandwiched between and bonded to outer steel layers, in which at least the surface on each side of the resin layer is comprised of certain specified ductile resins which exhibit no yielding behavior. When only the surface on each side of the resin layer is comprised of the ductile resin, the remaining core portion of the resin layer is preferably comprised of a resin which exhibits plastic behavior.

Preferred embodiments of the laminates according to this invention will be desribed below in detail with reference to the accompanying drawings, in which:

Figure 1 is a schematic cross-sectional view of an embodiment of the sandwich laminates of the invention; and

Figure 2 is a schematic cross-sectional view of another embodiment thereof.

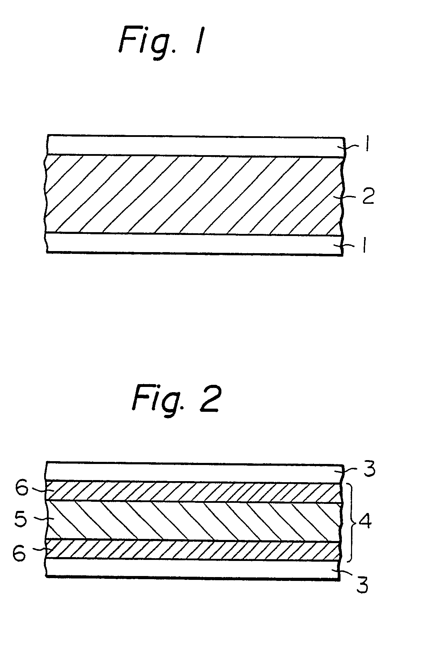

In one embodiment of the present invention as shown in Figure 1, the sandwich laminate comprises outer metal layers 1, 1 and single resin layer 2 sandwiched between the outer resin layers, said resin layer 2 being comprised of a ductile resin which exhibits no yielding behavior. In other words, the entire resin layer is comprised of such resin.

We have made various experiments to study the reason why cracking of the outer metal layers occurs during working and found that this type of cracking is caused by necking of the resin layer at or adjacent to the interfaces (i.e., bonded surfaces) between the resin and metal layers during working. The necking

3

phenomenon means that the resin has yielded under the stress applied thereto during working. It has now been found that the use of a resin material which does not exhibit any yielding behavior (i.e., which does not have a yielding point) at least on both surfaces of the resin layer is effective to prevent cracking of the metal layers during working. We have, in fact, found that if the resin used on both surfaces of the resin layer have enough ductility to enable the resin to follow severe working but have no yielding point, cracking of the outer metal layers can be avoided during working.

Outer steel layers 1, 1 may be coated with a corrosion-resistant metal such as zinc, tin, chromium or the like on one or both surfaces thereof. Similarly, the surface of each steel sheet not facing the resin core layer may be coated with such resin as epoxy or melamine resin. Each outer steel layer usually has a thickness in the range of from 0.05 to 2.0 mm, preferably from 0.1 to 1.0 mm. At least one surface of each steel sheet facing the resin core layer is usually subjected to surface treatment for corrosion protection prior to laminating in order to provide the laminate with satisfactory corrosion resistance. The surface treatment techniques useful for this purpose include chemical treatment, plating and vacuum deposition. Preferably the surface treatment of steel sheets is conducted by electrolytic chromate treatment, Ni-Zn alloy plating or Fe-Zn alloy plating. Such surface treatment is particularly effective to prevent corrosion beginning at the edge faces of the laminate, which is often encountered when the laminate is exposed to relatively corrosive environment and which results in a significant decrease in bond strength between the resin and metal layers thereby causing delamination. It is preferred that the plated coating of Ni-Zn alloy contain 1—20% by weight of Ni and that of Fe-Zn alloy contain 5—60% by weight of Fe.

The resin materials suitable for use as resin layer 2 in the laminates shown in Fig. 1 are copolymers of two or more monomers selected from ethylene, propylene, butene-1, butadiene, styrene, vinyl acetate, vinyl chloride, acrylic acid, methacrylic acid, acrylate and methacrylate esters, as well as polyurethanes, chlorosulfonated polyethylene and various rubbers. As discussed above, the resin materials should be ductile and exhibit no yielding behavior. Other resins or additives such as plasticizers and inorganic fillers may be incorporated in the resin material as long as the resin still retains its ductility and exhibits no yielding behavior.

Enough adhesion for laminating (i.e., bonding) is necessary between the resin and metal layers. When the resin layer does not have enough adhesion to the metal layers in itself, the desired level of adhesion can be imparted to the resin either by incorporation of an adherent resin in the resin to be used as resin layer 2 or by modification of the resin with an unsaturated carboxylic acid or its ester or anhydride such as acrylic acid, acrylate, methacrylate or maleic anhydride or modification thereof by appropriate reaction such as chlorination or chlorosulfonation. Alternatively, an adhesive layer may be interposed between the resin layer and each outer metal layer.

The thickness of the resin layer is not critical, but usually it is in the range of from 0.1 to 10 mm, preferably from 0.2 to 2.0 mm.

In another preferred embodiment of the invention which is shown in Fig. 2, the sandwich laminate comprises outer metal layers 3,3 and resin layer 4 sandwiched between metal layers 3,3 wherein each resin layer 4 itself has a three-layered structure which comprises core resin sheet 5 sandwiched between relatively thin outer resin sheets 6,6. Outer resin sheets 6,6 are made of a ductile resin exhibiting no yielding behavior and core resin sheet 5 is made of a resin which exhibits plastic behavior. Core resin sheet 5 is bonded to each outer resin sheet 6 with or without an adhesive layer (not shown). Thus, the resin layer in this embodiment is comprised of the ductile resin exhibiting no yielding behavior only on the surfaces. The sandwich laminates having the structure shown in Fig. 2 are particularly suitable for use in those applications where they are required to have good heat resistance and/or springback after bending should be minimized.

The ductile resins exhibiting no yielding behavior which are used at least on the surfaces of the resin layer according to the present invention generally have elastomeric properties and their elastic limits are usually relatively high. For this reason, sandwich laminates in which the entire resin layer is comprised of such resin will tend to spring back to a relatively great extent after bending. In addition, these resins have often rather low softening temperatures so that, when they are used in the entire part of the resin layer, the resulting sandwich laminates will have somewhat inferior heat resistance.

It has been found that these problems can be overcome by the use of a resin layer which comprises a core resin sheet of a resin exhibiting plastic behavior, said core resin sheet being sandwiched between outer resin sheets of a ductile resin exhibiting no yielding behavior. By virtue of such three-layered structure of the resin layer, the respective inferior properties of these two types of resins can be offset each other and it is possible to effectively utilize their respective advantageous properties. As a result, the sandwich laminate shown in Figure 2 can be subjected to severe working without the outer steel layers cracking during working and with minimized level of springback of the worked laminate. Other desirable properties characteristic of sandwich laminates including good heat resistance are not deteriorated appreciably in the laminate shown in Figure 2.

The resins suitable for use as core resin sheet 5 include such resins exhibiting plastic behavior as polyethylene, polypropylene, polyvinyl chloride, polystyrene, ABS resin (acrylonitrile-butadiene-styrene copolymer), fluorocarbon resins, polyamides, polyesters, polycarbonates, polyacetals, acrylic resins and copolymers of these. Preferably, core resin sheet 5 is made of a ductile resin which exhibits both plastic and yielding behavior. Other resins and additives such as plasticizers and fillers may be added in the resin.

**0 115 103**

The resins suitable for use in outer resin sheets 6,6 may be the same as described above with respect to resin layer 2 of the laminate shown in Figure 1. Similarly other resins and additives such as plasticizers and inorganic fillers may be incorporated in the resins as long as they still retain their ductility and exhibit no yielding behavior.

In the case where adhesion between core sheet 5 and each outer sheet 6 of the resin layer 4 is not enough to ensure bonding, it is necessary to interpose an adhesive layer between these sheets. The adhesive layer useful for this purpose may be formed of such adhesive resins as adhesive polyethylene and adhesive polypropylene.

Each outer resin sheet 6 should have enough adhesion to be bonded to outer metal layer 3. If the resin used as outer resin sheet 6 has poor adhesion to the metal in itself, the bonding strength between outer resin sheet 6 and metal layer 3 can be increased to a desired level, as discussed above with respect to the laminate shown in Fig. 1, either by incorporating an adhesive resin in the resin to be used as outer sheet 6, by modifying the resin with an unsaturated carboxylic acid or its ester or anhydride (e.g., acrylic acid, an acrylate or methacrylate, or meleic anhydride), or by modifying the resin through an appropriate reaction such as chlorination or chlorosulfonation.

The thickness of each sheet of resin layer 4 of the laminate in this embodiment is not critical, and may be selected depending on the purpose of use of the laminate. However, it is preferred that the thickness of each outer resin sheet 6 be at least 1 µm so as to ensure that the outer metal layers have good resistance to cracking during working such as bending. As previously mentioned, each outer metal layer 3 usually has a thickness in the range of from 0.05 to 2.0 mm, preferably from 0.1 to 1.0 mm. The thickness of resin layer 4 is usually in the range of from 0.1 to 10 mm, preferably from 0.2 to 2.0 mm. As mentioned above, the thickness of each outer resin sheet 6 is preferably at least 1 µm and more preferably it is at least 5 µm.

The sandwich laminates of the present invention may be prepared by a conventional laminating technique wherein two or more layers are heated and bonded together under pressure, for example, through a hot press or pressure rolls and then cooled. The laminating may be carried out in one step, that is, all the sheets constituting the sandwich laminate may be laminated at the same time. Alternatively, the laminating of the sheets may be carried out stepwise.

The following examples are given to illustrate the claimed invention. It should be understood, however, that the invention is not limited to the specific details set forth in the examples.

Example 1

A metal-resin-metal sandwich laminate having the construction shown in Fig. 1 was prepared by using as the outer metal layers cold rolled steel sheets each 0.2 mm thick and as the resin layer a 0.4 mm thick sheet of vinyl acetate-acrylic acid-ethylene copolymer, which was ductile and did not have a yielding point at room temperature. The three sheets were bonded together by hot pressing at 150°C and at a pressure of 20 kg/cm$^2$ (1.96×10$^6$ Pa). Similar sandwich laminates were prepared in the same way except that the thickness of the single resin sheet was 0.5 mm, 0.6 mm and 0.8 mm.

The resulting sandwich laminates were subjected to 180° bending test at room temperature to determine the threshold bending inner diameter, that is, the minimum inner diameter of the 180° bend of the laminate in which no cracks were observed in the outer metal layers after bending. In this test all the laminates showed a threshold bending inner diameter of 0 mm.

For comparison, the same sandwich laminates as above except that the resin layer was modified polypropylene sheets instead of the copolymer sheets were prepared in the same way as described above and subjected to the same 180° bending test. The modified polypropylene used had a yielding point at room temperature. In the bending test, cracking of the outer metal layers was observed when the bending inner diameter was less than 4 mm for the laminates with 0.4 mm and 0.5 mm thick resin layers, less than 5 mm for the laminate with 0.6 mm thick resin layer and less than 7 mm for the laminate with 0.8 mm thick resin layer.

Example 2

A sandwich laminate in which each outer steel layer was a 0.4 mm thick cold rolled steel sheet and the resin layer was a 0.6 mm thick polyurethane sheet was prepared by hot pressing at 200°C and 20 kg/cm$^2$ and subjected to the 180° bending test as described in Example 1. The threshold bending inner diameter was 2 mm, which was a satisfactory value from a practical viewpoint. In other words, no cracks were observed in the metal layers when the laminate was bent 180° with a bending inner diameter of 2 mm or greater. The polyurethane used as the resin layer did not have a yielding point.

Example 3

Various metal-resin-metal sandwich laminates having the construction shown in Fig. 2 were prepared by hot pressing at a pressure of 20 kg/cm$^2$ (1.96×10$^6$ Pa). In each sandwich laminate, resin layer 4 was comprised of core sheet 5 sandwiched between outer resin sheets 6,6 and resin layer 4 itself was sandwiched between outer metal layers 3,3. When necessary, an adhesive layer was placed between core sheet 5 and each outer resin sheet 6. The materials for these laminations (i.e., sheets or layers constituting the laminates) are indicated in Table 1 below together with the laminating (i.e., hot pressing) temperatures. For comparison, sandwich laminates in which the resin layer was a single layer of a modified

5

polypropylene having a yielding point at room temperature were prepared. Each of the sandwich laminates thus obtained was subjected to 180° bending test at room temperature to determine the threshold bending inner diameter and to determine the extent of springback of the laminate after bending. The heat resistance of each sandwich laminate was also evaluated by determining the maximum heat resisting temperature at which the sandwich laminate could be kept with no deformation. The test results are also summarized in Table 1, in which the ratings of heat resistance indicate the following maximum heat resisting temperatures:

| Rating | Maximum heat resisting temperature |
|--------|-----------------------------------|
| I | 200°C (very good) |
| II | 150°C (good) |
| III | 120°C (fair) |
| IV | 100°C (poor) |

TABLE 1

| | No. | Material (thickness) | | | | Lami-nating temp. (°C) | Treshold bending inner diameter | Extent of spring-back | Heat resis-tance |
|---|---|---|---|---|---|---|---|---|---|
| | | Outer metal layer (1) | Resin core sheet (3) | Resin outer sheet (4) | Adhesive layer | | | | |
| This invention | 1 | Steel* (0.2 mm | Nylon 6 (0.4 mm) | Resin A (50 μm) | — | 230 | 0 mm | Small | I |
| | 2 | Stainless steel (0.3 mm) | Polypropylene (0.6 mm) | Resin B (10 μm) | Resin C (30 μm) | 200 | 1 mm | Small | II |
| | 3 | Steel* (0.2 mm) | ABS resin (0.8 mm) | Polyurethane (10 μm) | — | 200 | 0 mm | Small | II |
| | 4 | " | Polyethylene (0.6 mm) | Resin D (20 μm) | — | 180 | 0 mm | Small | II—III |
| Comparative | 5 | " | Resin C (0.4 mm) | — | — | 200 | 4 mm | Small | II |
| | 6 | " | Resin C (0.6 mm) | — | — | 200 | 5 mm | Small | II |
| | 7 | " | Resin C (0.8 mm) | — | — | 200 | 7 mm | Small | II |

(Note) Resin A: Vinyl acetate-acrylic acid-ethylene copolymer.
Resin B: Nitrile rubber modified with phenol.
Resin C: Polypropylene modified with maleic anhydride.
Resin D: Chlorosulfonated polyethylene.
*Cold rolled steel sheet.

**0 115 103**

As can be seen from Table 1, sandwich laminate Nos. 1—4 in which the resin layer was comprised of a core sheet made of a resin exhibiting yielding behavior and outer sheets made of a resin not exhibiting yielding behavior according to the present invention showed very good workability. That is, in all the laminate Nos. 1—4 the threshold bending inner diameter was 1 mm or less and in most of these laminates it was 0 mm. In addition, these sandwich laminates showed springback only to a small extent and their heat resistance remained at a satisfactory level required for·sandwich laminates.

In contrast, laminate Nos. 5—7 which are comparative examples showed poor workability in that the threshold bending inner diameter was larger than 4 mm in all these examples.

Example 4

Cold rolled 0.2 mm thick steel sheets with or without various surface coatings formed by zinc plating, electrolytic chromate treatment, Ni-Zn alloy plating or Fe-Zn alloy plating were degreased, rinsed with water and then subjected to chromate treatment. The Ni-Zn and Fe-Zn alloy plating was conducted so as to provide coatings of different Ni and Fe contents, respectively, as indicated in Tables 3 and 4 below. The chromate treatment was carried out by dipping the sheets in an aqueous solution of Parcolene® 62 (manufactured by Nihon Parkerizing) having a concentration of 20 g/l at 50°C, then wiping through rollers and drying by hot air. After the chromate treatment, two pieces of each steel sheet were used to prepare a metal-resin-metal sandwich laminate. The resin sandwiched between the steel sheets was a resin laminate comprised of a 0.5 mm thick polyethylene sheet sandwiched between outer resin sheets of vinyl acetate-acrylic acid-ethylene copolymer as used in Example 1 each having a thickness of 50 μm, and the laminating was carried out by hot pressing at 150°C and at 20 kg/cm² ($1.96 \times 10^6$ Pa).

A test piece 10 mm wide×200 mm long was cut out of each resulting metal-resin-metal sandwich laminate and subjected to a salt spray test (SST) in which a 5% NaCl solution was sprayed onto the test piece at 35°C for 20 days. Before and after this test, the bond strength of the test piece was determined by a peel test at a rate of pulling of 50 mm/min (approx. 0.8 m/sec). Another test piece of the same size was bent with a bending inner diameter of 5 mm and subjected to the salt spray test. The degree of corrosion at the edge faces of the laminate was evaluated on each of the flat and bent test pieces after the salt spray test. The results are summarized in Tables 2, 3 and 4.

Note: The bond strength figures in these tables are in units of $9.80665 \times 10^4$ Pa

TABLE 2
Electrolytic chromate treatment

| No. | Steel sheet | Bond strength (kg/cm) | |
|---|---|---|---|
| | | Initial | After SST* |
| 1 | Cold rolled steel sheet subjected to electrolytic chromate treatment** | 4.7 | 4.0 |
| 2 | Zinc plated steel sheet subjected to electrolytic chromate treatment** | 5.0 | 4.3 |
| 3 | Cold rolled steel sheet | 4.0 | 1.0 |
| 4 | Zinc plated steel sheet | 4.7 | 0 |

*Salt spray test.
**Cr weight in the coating: 210 mg/m².

8

# 0 115 103

TABLE 3
Ni-Zn alloy plating

| | Steel sheet | | | Bond strength (kg/cm) | | Corrosion resistance at edge face after SST | |
|---|---|---|---|---|---|---|---|
| No. | Type | % Ni in coating | Coating weight (g/m², each side) | Initial | After SST | Flat | Bent |
| 1 | Ni-Zn plated | 13 | 20 | 4.8 | 4.1 | Good | Good |
| 2 | " | 13 | 45 | 4.5 | 4.0 | " | " |
| 3 | " | 13 | 90 | 4.6 | 4.0 | " | " |
| 4 | " | 13 | 150 | 5.0 | 3.9 | " | Poor |
| 5 | " | 6 | 20 | 4.8 | <0.5 | Poor | Poor |
| 6 | " | 25 | 20 | 4.4 | 1.3 | Slight poor | Slight poor |
| 7 | Cold rolled sheet | — | — | 4.0 | 1.0 | Poor | Poor |
| 8 | Zn plated | 0 | 20 | 4.7 | 0 | " | " |

TABLE 4
Fe-Zn alloy plating

| | Steel sheet | | | Bond strength (kg/cm) | | Corrosion resistance at edge face after SST | |
|---|---|---|---|---|---|---|---|
| No. | Type | % Fe in coating | Coating weight (g/m², each side) | Initial | After SST | Flat | Bent |
| 1 | Fe-Zn plated | 10 | 20 | 4.4 | 3.5 | Good | Good |
| 2 | " | 40 | 20 | 4.6 | 3.7 | " | " |
| 3 | " | 40 | 60 | 4.5 | 3.6 | " | " |
| 4 | " | 40 | 100 | 4.5 | 3.7 | " | " |
| 5 | " | 40 | 150 | 4.3 | 3.6 | " | Poor |
| 6 | " | 2 | 20 | 4.5 | <0.5 | Poor | " |
| 7 | " | 70 | 20 | 4.7 | 1.6 | Slight poor | Slight poor |
| 8 | Cold rolled sheet | — | — | 4.0 | <0.5 | Poor | Poor |
| 9 | Zn plated | 0 | 20 | 4.8 | 0 | " | " |

As discussed above, the metal-resin-metal sandwich laminates according to the present invention have highly improved workability and can withstand satisfactorily severe bending and drawing without cracking in the metal layers. They therefore make possible the use of sandwich laminates in working applications. The sandwich laminates of the invention are particularly suitable for use in the manufacture of automobile bodies including doors, fenders, hoods, trunk lids, etc. They are also applicable to the manufacture of other articles such as interior panels of vehicles and buildings, containers, snowmobiles, and housings of various devices including computers.

## Claims

1. A metal-resin-metal sandwich laminate comprising a resin layer sandwiched between and bonded to

9

outer metal layers, characterised in that the outer metal layers are of steel, and that at least the surface on each side of the resin layer is of a ductile resin exhibiting no yield point in its stress-strain curve, and having a composition selected from the group consisting of copolymers of two or more monomers selected from ethylene, propylene, butene-1, butadiene, styrene, vinyl acetate, vinyl chloride, acrylic acid, methacrylic acid and acrylate and methacrylate esters; polyurethanes, chlorosulfonated polyethylene and rubbers.

2. The metal-resin-metal sandwich laminate according to Claim 1 in which the ductile resin exhibiting no yield point is chosen from the following:—

Copolymers of vinyl acetate, acrylic acid and ethylene;

Nitrile rubber modifed with phenol;

Chlorosulphonated polyethylene; and

Polyurethane.

3. The metal-resin-metal sandwich laminate according to Claim 1 or Claim 2 wherein the outer metal layers each have a corrosion-resistant coating on at least the surface facing the resin layer.

4. The metal-resin-metal sandwich laminate according to Claim 3 wherein the steel sheets are cold roller steel sheets.

5. The metal-resin-metal sandwich laminate according to Claim 3 or 4 wherein the corrosion-resistant coating on each steel sheet is formed by electrolytic chromate treatment, Ni-Zn alloy plating or Fe-Zn alloy plating.

6. The metal-resin-metal sandwich laminate according to any one of Claims 1 to 5 wherein the entire resin layer is comprised of the said ductile resin exhibiting no yield-point.

7. The metal-resin-metal sandwich laminate according to any one of Claims 1 to 5 wherein the resin layer is comprised of a core resin sheet made of a resin exhibiting plastic behaviour and outer resin sheets made of a ductile resin exhibiting no yield-point, said core resin sheet being sandwiched between said outer resin sheets and bonded to each outer resin sheet with or without an adhesive layer.

8. The metal-resin-metal sandwich laminate according to Claim 7 wherein each outer resin sheet has a thickness of at least 1 μm.

9. The metal-resin-metal sandwich laminate according to Claim 7 or 8 wherein the core resin sheet is made of a resin selected from the group consisting of polyethylene, polypropylene, polyvinyl chloride, polystyrene, ABS resin, fluorocarbon resins, polyamides, polyesters, polycarbonates, polyacetals, acrylic resins and copolymers thereof.

10. An article made of the metal-resin-metal sandwich laminate according to any preceding claim.

**Patentansprüche**

1. Metall-Harz-Metall-Sandwichlaminat aus einer zwischen den äußeren Metallschichten schichtweise angeordneten und daran gebundenen Harzschicht, dadurch gekennzeichnet, daß die äußeren Metallschichten aus Stahl bestehen und mindestens die Oberfläche auf jeder Seite der Harzschicht aus einem duktilen Harz besteht, das keine Streckgrenze in seiner Dehnungs-Spannungskurve aufweist und aus Copolymeren aus zwei oder mehreren Monomeren der Ethylen, Propylen, 1-Buten, Butadien, Styrol, Vinylacetat Vinylchlorid, Acrylsäure, Methacrylsäure, Acrylat- und Methacrylatester, Polyurethane, chlorsulfoniertes Polyethylen und Kautschuke umfassenden Gruppe zusammengesetzt ist.

2. Metall-Harz-Metall-Sandwichlaminat nach Anspruch 1, dadurch gekennzeichnet, daß das duktile Harz ohne Streckgrenze aus der Copolymere von Vinylacetat, Acrylsäure und Ethylen, phenolmodifizierten Nitrilkautschuk, chlorsulfoniertes Polyethylen und Polyurethan umfassenden Gruppe ausgewählt ist.

3. Metall-Harz-Metall-Sandwichlaminat nach Anspruch 1, dadurch gekennzeichnet, daß die äußeren Metallschichten jeweils eine korrosionsbeständige Beschichtung auf zumindest der der Harzschicht zugewandten Oberfläche aufweisen.

4. Metall-Harz-Metall-Sandwichlaminat nach Anspruch 3, dadurch gekennzeichnet, daß die Stahlbleche haltgewalzte Stahlbleche sind.

5. Metall-Harz-Metall-Sandwichlaminat nach Anspruch 3 oder 4, dadurch gekennzeichnet, daß die korrosionsbeständige Beschichtung auf jedem Stahlblech durch eine elektrolytische Chromatbehandlung, eine Ni-Zn-Legierungsplattierung oder eine Fe-Zn-Legierungsplattierung aufgebracht worden ist.

6. Metall-Harz-Metall-Sandwichlaminat nach einem der Ansprüche 1 bis 5, dadurch gekennzeichnet, daß die gesamte Harzschicht das duktile Harz ohne Streckgrenze umfaßt.

7. Metall-Harz-Metall-Sandwichlaminat nach einem der Ansprüche 1 bis 5, dadurch gekennzeichnet, daß die Harzschicht eine Kernschicht aus einem Harz mit plastischen Eigenschaften und äußeren Harzschichten aus einem duktilen Harz ohne Streckgrenze umfaßt, wobei die Kernschicht zwischen den äußeren Harzschichten angeordnet und mit oder ohne Haftschicht mit den äußeren Harzschichten verbunden ist.

8. Metall-Harz-Metall-Sandwichlaminat nach Anspruch 7, dadurch gekennzeichnet, daß jede äußere Harzschicht eine Dicke von mindestens 1 μm aufweist.

9. Metall-Harz-Metall-Sandwichlaminat nach Anspruch 7 oder 8, dadurch gekennzeichnet, daß die Kernschicht aus einem Harz aus der Polyethylen, Polypropylen, Polyvinylchlorid, Polystyrol, ABS-Harz, Fluorkohlenstoffharze, Polyamide, Polyester, Polycarbonate, Polyacetate, Acrylharze und Copolymere daraus umfassenden Gruppe gebildet ist.

10. Gegenstand aus dem Metall-Harz-Metall-Sandwichlaminat nach einem der vorangegangenen Ansprüche.

**Revendications**

1. Stratifié sandwich métal-résine-métal comprenant une couche de résine prise en sandwich entre des couches métalliques externes et liée à ces couches, caractérisé en ce que les couches métalliques externes sont en acier et en ce qu'au moins la surface de chaque côté de la couche de résine est faite d'une résine ductile ne présentant pas de limite élastique dans sa courbe contrainte-déformation, et ayant une composition choisie dans le groupe constitué par les copolymères d'au moins deux monomères choisis parmi l'éthylène, le propylène, le butène-1, le butadiène, le styrène, l'acétate de vinyle, le chlorure de vinyle, l'acide acrylique, l'acide méthacrylique et les acrylates et méthacrylates; les polyuréthannes, le polyéthylène chlorosulfoné et les caoutchoucs.

2. Stratifié sandwich métal-résine-métal selon la revendication 1, dans lequel la résine ductile ne présentant pas de limite élastique est choisie parmi les suivantes:
des copolymères d'acétate de vinyle, d'acide acrylique et d'éthylène;
du caoutchouc nitrile modifié par un phénol;
du polyéthylène chlorosulfoné; et
du polyuréthanne.

3. Stratifié sandwich métal-résine-métal selon la revendication 1 ou 2, dans lequel les couches métalliques externes comportent chacune un revêtement résistant à la corrosion sur au moins la surface en regard de la couche de résine.

4. Stratifié sandwich métal-résine-métal selon la revendication 3, dans lequel les tôles d'acier sont des tôles d'acier laminées à froid.

5. Stratifié sandwich métal-résine-métal selon la revendication 3 ou 4, dans lequel le revêtement résistant à la corrosion situé sur chaque tôle d'acier est formé par traitement électrolytique au chromate, plaquage avec un alliage Ni-Zn ou plaquage avec un alliage Fe-Zn.

6. Stratifié sandwich métal-résine-métal selon l'une quelconque des revendications 1 à 5, dans lequel la totalité de la couche de résine est constituée par ladite résine ductile ne présentant pas de limite élastique.

7. Stratifié sandwich métal-résine-métal selon l'une quelconque des revendications 1 à 5, dans lequel la couche de résine est constituée par une feuille de résine interne faite d'une résine présentant un comportement plastique et par des feuilles de résine externes faites d'une résine ductile ne présentant pas de limite élastique, ladite feuille de résine interne étant prise en sandwich entre lesdites feuilles de résine externes et étant liée à chaque des feuilles de résine externes avec ou sans une couche adhésive.

8. Stratifié sandwich métal-résine-métal selon la revendication 7, dans lequel chaque feuille de résine externe à une épaisseur d'au moins 1 µm.

9. Stratifié sandwich métal-résine-métal selon la revendication 7 ou 8, dans lequel la feuille de résine interne est faite d'une résine choisie dans le groupe constitué par le polyéthylène, le polypropylène, le poly(chlorure de vinyle), le polystyrène, la résine ABS, les résines fluorocarbonées, les polyamides, les polyesters, les polycarbonates, les polyacétals, les résines acryliques et leurs copolymères.

10. Article fait d'un stratifié sandwich métal-résine-métal selon l'une quelconque des revendications précédentes.

## Fig. 1

## Fig. 2